(19) Europäisches Patentamt
European Patent Office
Office européen des brevets

(11) **EP 2 401 697 B1**

(12) **EUROPEAN PATENT SPECIFICATION**

(45) Date of publication and mention
of the grant of the patent:
**01.05.2013 Bulletin 2013/18**

(51) Int Cl.:
*G06K 7/00* *(2006.01)*          *G06K 19/077* *(2006.01)*
*H01Q 1/24* *(2006.01)*          *H01Q 7/00* *(2006.01)*
*H01Q 1/22* *(2006.01)*

(21) Application number: **10707159.9**

(22) Date of filing: **25.02.2010**

(86) International application number:
**PCT/US2010/025323**

(87) International publication number:
**WO 2010/099266 (02.09.2010 Gazette 2010/35)**

(54) **WIRELESS COMMUNICATIONS INCLUDING AN ANTENNA FOR WIRELESS POWER TRANSMISSION AND DATA COMMUNICATION AND ASSOCIATED METHODS**

DRAHTLOSE KOMMUNIKATION BEINHALTEND EINE ANTENNE FÜR DRAHTLOSE LEISTUNGSÜBERTRAGUNG UND DATENKOMMUNIKATION UND DAMIT VERBUNDENES VERFAHREN

COMMUNICATION SANS FIL CONTENANT UNE ANTENNE POUR LA TRANSMISSION DE PUISSANCE SANS FIL ET LA COMMUNICATION DES DONNÉES ET METHODES ASSOCIÉES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.02.2009   US 393249**

(43) Date of publication of application:
**04.01.2012   Bulletin 2012/01**

(73) Proprietor: **Harris Corporation**
**Melbourne, FL 32919 (US)**

(72) Inventor: **PARSCHE, Francis Eugene**
**Palm Bay**
**Florida 32905 (US)**

(74) Representative: **Schmidt, Steffen**
**Wuesthoff & Wuesthoff**
**Patent- und Rechtsanwälte**
**Schweigerstrasse 2**
**81541 München (DE)**

(56) References cited:
EP-A1- 0 516 303          EP-A2- 0 257 544
WO-A2-00/64004           US-A- 5 675 346
US-A1- 2005 110 689      US-A1- 2008 136 720

## Description

The present invention relates to the field of communications, and, more particularly, to antennas for wireless communication and related methods.

Power requirements for modem, solid state electronics are progressively becoming lower and lower. For example, the Liquid Crystal Display (LCD) may require only milliwatts for operation, and the field effect transistor (FET) can respond to even small static charges. This has enhanced the utility of wireless power transmission as an approach for energizing electronics. An example and application of wireless power for electronics is the Radio Frequency Identification (RFID) transponder "tag", which can allow a method of storing and remotely retrieving data to a reader.

As background, wireless power transmission can be the conveyance of electrical energy by radio frequency (RF) techniques, such as the electric power transmitted and received between two radio antennas. Depending on antenna size and range of transmission, the energy may convey by far fields or by near fields, and the energy transferred weak or small. Although it may be impractical or even hazardous to convey high power over great distances, wireless power transmission can be effective, safe and reliable for lower powers and shorter ranges. Generally the shorter the range, the greater the power that can be conveyed. There is a need for wireless power that is more easily integrated with communications.

It is possible to have dual linear or dual circular polarization channel diversity. That is, a frequency may be reused if one channel is vertically polarized and the other horizontally polarized. Or, a frequency can also be reused if one channel uses right hand circular polarization (RHCP) and the other left hand circular polarization (LHCP). Polarization refers to the orientation of the E field in the radiated wave, and if the E field vector rotates in time, the wave is then said to be rotationally or circularly polarized. Orthogonal polarizations, e.g., polarizations that are perpendicular, can be vertical linear and horizontal linear or right and left hand circular, and they can be uncoupled as separate channels in communications.

The dipole antenna has been perhaps the most widely used of all the antenna types. It is of course possible however to radiate from a conductor which is not constructed in a straight line. Preferred antenna shapes are often Euclidian, being simple geometric shapes known through the ages. In general, antennas may be classified as to the divergence or curl of electric current, corresponding to dipoles and loops, and line and circle structures.

Many structures are described as loop antennas, but standard accepted, e.g., canonical, loop antennas are a circle. The resonant loop is a full wave circumference circular conductor, often called a "full wave loop". The typical prior art full wave loop is linearly polarized, having a radiation pattern that is a two petal rose, with two opposed lobes normal to the loop plane, and a gain of about 3.6 dBi. Reflectors are often used with the full wave loop antenna to obtain a unidirectional pattern.

Dual linear polarization (simultaneous vertical and horizontal polarization from the same antenna) has commonly been obtained from crossed dipole antennas. For instance, U.S. Patent 1,892,221, to Runge, proposes a crossed dipole system. A dual polarized loop antenna could be more desirable however, as loops provide greater gain in smaller area. An approach to dual circular polarization in single loops is described in U.S. Published Patent Application No. 20080136720, to Parsche et. al.

U.S. Patent No. 645,576, to Tesla, is directed to wireless power transmission. A pair of "elevated terminals" function as monopole antennas to accomplish radiation and reception of electric energy by radio. Spiral loading inductors were included to force antenna resonance. At ranges beyond $\lambda/2\pi$, operation may have been by far field radiation of electromagnetic waves, and at ranges less than $\lambda/2\pi$, the antennas radial reactive electric field (near E field) may have allowed for additional coupling. The spiral loading inductors were collocated with other windings to form a transformer in situ, to couple the generators and loads to the antennas. Connections were not however provided, to include a separate communications channel along with the power transmission.

Hybrid junctions, also known as hybrid couplers, are passive RF devices that may automatically sort and route. An example of a hybrid junction is the Branch Line Coupler, which may have four ports. When a signal is applied at port 1, it is coupled equally to ports 2 and 3 but not to port 4. Simple antennas having multiple ports with hybrid properties may be uncommon.

U.S. Patent No. 2,147,809, to Alford describes a conjugate bridge circuit providing for isolation between selected ports connected thereto. A 90 and 180 degree phase shifts are used between ports in a transmission line ring, forming a branch line coupler. Radiation from the circuit is not however described.

U.S. Patent 5,977,921 to Niccolai, et al. and entitled "Circular-polarized Two-way Antenna" is directed to an antenna for transmitting and receiving circularly polarized electromagnetic radiation which is configurable to either righthand or left-hand circular polarization. The antenna has a conductive ground plane and a circular closed conductive loop spaced from the plane, i.e., no discontinuities exist in the circular loop structure. A signal transmission line is electrically coupled to the loop at a first point and a probe is electrically coupled to the loop at a spaced-apart second point. This antenna requires a ground plane and includes a parallel feed structure, such that the RF potentials are applied between the loop and the ground plane. The "loop" and the ground plane are actually dipole half elements to each other.

U.S. Patent 5,838,283 to Nakano and entitled "Loop Antenna for Radiating Circularly Polarized Waves" is directed to a loop antenna for a circularly polarized wave. Driving power fed may be conveyed to a feeding point via an internal coaxial line and a feeder conductor passes through an I-shaped conductor to a C-type loop element disposed in spaced facing relation to a ground plane. By the action of a cutoff part formed on the C-type loop element, the C-type loop element radiates a circularly polarized wave. Dual linear, or dual circular polarization are not however provided.

WO 00/64004 discloses a RF transponder for passive tagging and capable of rectifying AC power derived by a carrier wave and that is capable of modulating and demodulating control signals. The RF transponder has an antenna and two ports with a particular displacement so as the current on the antenna is null.

EP 0 257 544 A2 discloses a receiver for microwave signals based on a single microstrip antenna. The receiver is capable of receiving polarized power signals and data signals. Power signals are rectified though Schottky diodes, so that energy can be outputted to other components of the receiver.

US 2008/136720 A1 discloses a multiple polarization loop antenna which may utilize a loop electrical conductor and two feedpoints separated each other by one quarter of the length of the loop circumference.

Although various antennas are known for power transmission and communication they do not include isolated ports and cannot simultaneously provide the radio frequency (RF) power and communications link, e.g., diversity in the field of wireless RF identification (RFID) tags.

In view of the foregoing background, it is therefore an object of the present invention to provide data communication and power transmission between devices using a dual polarized antenna.

This and other objects, features, and advantages in accordance with the present invention are provided by a wireless communication system for data communication and power transmission according to claim 1. The system includes a first device, a radio frequency identification (RFID) reader, having a wireless power transmitter, a first wireless data communications unit, and a first dual polarized loop antenna comprising a first loop electrical conductor and first and second isolated signal feedpoints along the first loop electrical conductor and separated by one quarter of a length of the first loop electrical conductor. The wireless power transmitter is coupled to the first isolated signal feedpoint to transmit a power signal having a first polarization, and the wireless data communications unit is coupled to the second isolated signal feedpoint to communicate using a data signal having a second polarization.

A second device, an RFID tag, for communications with the first device includes a second dual polarized loop antenna comprising a second loop electrical conductor and first and second isolated signal feedpoints along the second loop electrical conductor and separated by one quarter of a length of the second loop electrical conductor. A second wireless data communications unit is coupled to the second isolated signal feedpoint of the second dual polarized loop antenna to communicate with the first wireless data communications unit of the first device using the data signal having the second polarization. A wireless power receiver is coupled to the first isolated signal feedpoint of the second dual polarized loop antenna to receive the power signal having the first polarization from the wireless power transmitter of the first device, and to provide power for the second device.

The first and second dual polarized loop antennas may provide for simultaneous data communication and power transmission between the first and second devices. Also, the first and second isolated signal feedpoints along the loop electrical conductor of each of the first and second dual polarized loop antennas may be operated at a signal feedpoint phase angle input difference of 0 degrees. Each of the first and second isolated signal feedpoints of each of the first and second dual polarized loop antennas may define a discontinuity in the respective loop electrical conductor.

In of each of the first and second dual polarized loop antennas, the loop electrical conductor may be a circular electrical conductor. Also, each of the first and second dual polarized loop antennas may be a dual linearly polarized loop antenna.

A method aspect is defined in claim 6 directed to data communication and power transmission between first and second wireless communication devices, the method including providing the first device with a wireless power transmitter, a first wireless data communications unit, and a first dual polarized loop antenna comprising a loop electrical conductor and first and second isolated signal feedpoints along the loop electrical conductor and separated by one quarter of a length of the loop electrical conductor. The wireless power transmitter is coupled to the first isolated signal feedpoint to transmit a power signal having a first polarization, and the wireless data communications unit being coupled to the second isolated signal feedpoint to communicate using a data signal having a second polarization.

The method includes providing the second device with a second dual polarized loop antenna comprising a loop electrical conductor and first and second isolated signal feedpoints along the loop electrical conductor and separated by one quarter of a length of the loop electrical conductor. A second wireless data communications unit is coupled to the second isolated signal feedpoint of the second dual polarized loop antenna to communicate with the wireless data communications unit of the first device using the data signal having the second polarization. A wireless power receiver is coupled to the first isolated signal feedpoint of the second dual polarized loop antenna to receive the power signal having the first polarization from the wireless power transmitter of the first device, and to provide power for the second device.

The approach includes the use of isolated ports and allows simultaneous use of the radio frequency (RF) power and communications link on the same frequency or spaced apart in frequency by wireless RF identification (RFID) tags.

FIG. 1 is a schematic diagram of an embodiment, a dual polarized (e.g., orthogonally linearly polarized) loop antenna, in accordance with features of the present invention.

FIG. 2 is a schematic diagram of an embodiment of a system including first and second devices each using the dual polarized loop antenna of FIG. 1.

FIG. 3 is a graph depicting an elevation cut far field radiation pattern for the dual polarized loop antenna of FIG. 1, compared with a ½ wave dipole turnstile antenna, mounted in the same plane.

FIG. 4 is a graph of the continuous power conveyed between two units of the present invention loop antenna.

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

As discussed above, features of the present invention may apply to the field of radio frequency identification (RFID). RFID tags may be defined in three general types: passive, active, or semi-passive (also known as battery-assisted). Passive tags require no internal power source, thus being pure passive devices (they are only active when a reader is nearby to power them). Semi-passive and active tags use a power source, usually a small battery. To communicate, tags respond to queries from a tag reader.

Passive RFID tags have no internal power supply. The small electrical current induced in the antenna by the incoming radio frequency signal provides just enough power for the integrated circuit in the tag to power up and transmit a response. Most passive tags signal by backscattering the carrier wave from the reader. This means that the antenna has to be designed both to collect power from the incoming signal and also to transmit the outbound backscatter signal. The response of a passive RFID tag is not necessarily just an ID number as the tag chip may even include nonvolatile memory for storing data.

Active RFID tags are much larger and have their own internal power source, which is used to power the integrated circuits and to broadcast the response signal to the reader. Communications from active tags to readers is typically much more reliable than from passive tags. Many active tags today have operational ranges of hundreds of meters, and a battery life of up to 10 years. Active tags may include larger memories than passive tags, and may include the ability to store additional information received from the reader.

Semi-passive tags are similar to active tags in that they have their own power source, but the battery only powers the microchip and does not power the broadcasting of a signal. The response is usually powered by backscattering the RF energy from the reader, where energy is reflected back to the reader as with passive tags. An additional application for the battery is to power data storage. Energy from the reader may be collected and stored to emit a response in the future.

Extending the capability of RFID to go beyond the basic capabilities of conventional RFID is desirable. For example, extending the capability may include reading at longer distances and within challenging environments, and/or storing larger amounts of data on the tag.

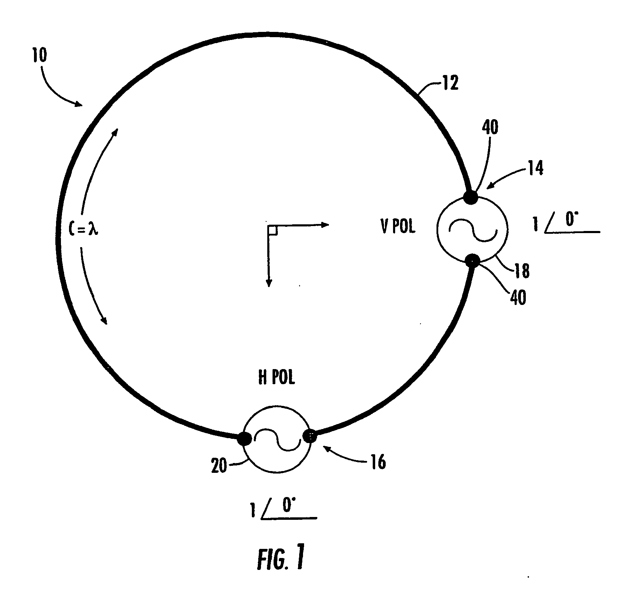

Referring initially to FIG. 1, an embodiment of the antenna for use in a wireless communication system for data communication and power transmission in accordance with features of the present embodiment will be described. The antenna is a dual polarized (e.g., operates with two orthogonal polarizations) loop antenna 10 which can provide simultaneous vertical and horizontal polarization from two isolated ports. The dual polarized loop antenna 10 is a 2-channel antenna, which can sort and multiplex two channels on the same frequency. In the dual polarized loop antenna 10, the ports (e.g., the respective orthogonal polarization ports) are isolated from one another, and are used as independent channels, for data communication and power transmission as will be discussed in further detail below.

The dual polarized loop antenna 10 includes a loop electrical conductor 12, e.g., a circular electrical conductor. The loop electrical conductor 12 may be a conductive wire, tubing, trace etc., and the circumference is preferably equal to one wavelength. Two signal feedpoints 14, 16 are along the loop electrical conductor and separated by one quarter of a length of the loop electrical conductor. One signal feedpoint 14 may be referred to as the vertical polarized port and include a signal source 18 connected in series in the loop electrical conductor 12. The other signal feedpoint 16 may be referred to as the horizontal polarized port and include a signal source 20 connected in series in the loop electrical conductor 12.

Each of the signal feedpoints 14, 16 is a series signal feedpoint and the signal sources 18, 20 coupled thereto provide the simultaneous vertical and horizontal polarization for the loop electrical conductor 12. Also, the signal feedpoints 14, 16 along the loop electrical conductor 12 of the dual polarized loop antenna 10 may be operated at a signal feedpoint phase angle input difference of 0 degrees. Each of the series signal feedpoints 14, 16 preferably defines a discontinuity in the loop electrical conductor 12. Each of the signal feedpoints 14, 16 may have two terminals 40 to form a port.

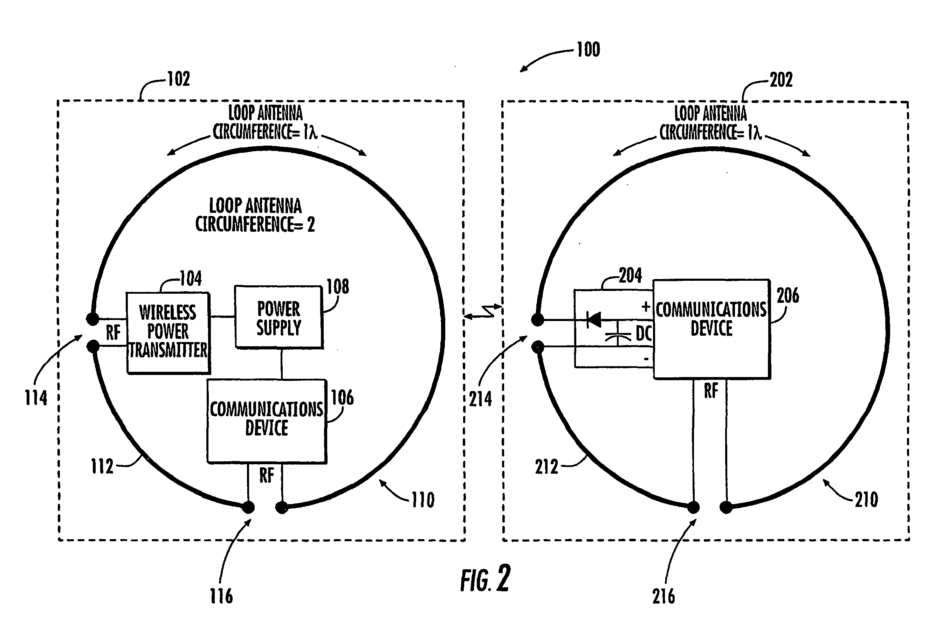

Referring additionally to FIG. 2, a wireless communication system 100 for data communication and power transmission in accordance with features of the present invention will now be described. The system 100

includes a first device **102**, e.g., a radio frequency identification (RFID) reader, having a wireless power transmitter **104,** a first wireless data communications unit **106,** and a first dual polarized loop antenna **110** as discussed above. The wireless power transmitter may be coupled to a power supply **108.**

The antenna **110** includes a loop electrical conductor **112** and first and second isolated signal feedpoints **114, 116** along the loop electrical conductor and separated by one quarter of a length of the loop electrical conductor. The wireless power transmitter **104** is coupled to the first isolated signal feedpoint **114** to transmit a power signal having a first polarization (e.g., vertical polarization). The wireless data communications unit **106** is coupled to the second isolated signal feedpoint **116** to communicate using a data signal having a second polarization (e.g., horizontal polarization).

A second device **202,** e.g., an RFID tag, is for communications with the first device **102** and includes a second dual polarized loop antenna **210** comprising a loop electrical conductor **212** and first and second isolated signal feedpoints **214, 216** along the loop electrical conductor and separated by one quarter of a length of the loop electrical conductor. A second wireless data communications unit **206** is coupled to the second isolated signal feedpoint **216** of the second dual polarized loop antenna **210** to communicate with the wireless data communications unit **106** of the first device **102** using the data signal having the second polarization. A wireless power receiver **204** (e.g., a power rectifier circuit) is coupled to the first isolated signal feedpoint **214** to receive the power signal having the first polarization from the wireless power transmitter **104** of the first device, and to provide power for the wireless data communications unit **106** of the first device **102.**

The first and second dual polarized loop antennas **110, 210** may provide for simultaneous data communication and power transmission between the first and second devices **102, 202.**

The approach includes the use of isolated ports and allows simultaneous use of the radio frequency (RF) power and communications link, e.g., in the field of wireless RF identification (RFID) tags. The approach uses a combination of two full wave loop antennas, each antenna having 2 ports which are ¼ wavelength apart and isolated from each other. The features of the system may be advantageously used to address range issues with RFID devices. Although the present invention is directed to RFID transponders, it can also be used to remotely power other communication devices including e.g., remote controls or wireless microphones. The system advantages include real time operation, e.g., power and communications are conveyed simultaneously on the same frequency.

A theory of operation for the dual polarized loop antenna **110** will now be described. Signal feedpoints **14, 16** are separated by unequal distances in the clockwise and counterclockwise directions, corresponding to 90 and 270 degrees phase shifts and a phase difference of 180 degrees. The transposition of forwards and backwards traveling waves from either feedpoint to the other feedpoint results in potentials equal in amplitude but 180 out of phase, and cancellation of the two waves at the opposite feedpoint occurs.

Continuing the theory of operation, the one wavelength circular conductor of dual polarized loop antenna **110** is akin to the one wavelength perimeter of a branch line hybrid coupler (note that although the branch line coupler is frequently printed in a square shape of one wavelength perimeter, it may also of course be printed in a circle of 1 wavelength circumference). Dual polarized loop antenna **110** signal feedpoint **14** is akin to branchline coupler port 4, and dual polarized loop antenna **110** signal feedpoint **16** is akin to branch line coupler port 1. As branch line couplers provide isolation between ports 1 and 4, isolation is similarly provided between polarized loop antenna **110** signal feedpoints **14, 16.** The dual polarized loop antenna **110** is of course without physical provision of branch line coupler ports 2 and 3. As dual polarized loop antenna **110** is without the shielding, e.g., ground plane(s) typically used with the branch line coupler, dual polarized loop antenna **110** provides the radiating function of an antenna as well. As background, theory for Branch Line Hybrid Couplers is described in "Hybrid Circuits For Microwaves", W. A. Tyrell, Proceedings of the Institute Of Radio Engineers, Nov. 1947, pp. 1294 -1306.

A method aspect is directed to data communication and power transmission between first and second wireless communication devices **102, 202.** The method includes providing the first device **102** with a wireless power transmitter **104,** a first wireless data communications unit **106,** and a first dual polarized loop antenna **110** comprising a loop electrical conductor **112** and first and second isolated signal feedpoints **114, 116** along the loop electrical conductor and separated by one quarter of a length of the loop electrical conductor. The wireless power transmitter **104** is coupled to the first isolated signal feedpoint **114** to transmit a power signal having a first polarization, and the wireless data communications unit **106** is coupled to the second isolated signal feedpoint **116** to communicate using a data signal having a second polarization.

The method includes providing the second device **202** with a second dual polarized loop antenna **210** comprising a loop electrical conductor **212** and first and second isolated signal feedpoints **214, 216** along the loop electrical conductor and separated by one quarter of a length of the loop electrical conductor. A second wireless data communications unit **206** is coupled to the second isolated signal feedpoint **216** of the second dual polarized loop antenna **210** to communicate with the wireless data communications unit **106** of the first device **110** using the data signal having the second polarization. A wireless power receiver **204** is coupled to the first isolated signal feedpoint **214** of the second dual polarized loop antenna **210** to receive the power signal having the first polarization from the wireless power transmitter **104** of the first device **110,** and to provide power for the wireless data communications unit **106** of the first device **110.**

Wireless power receiver **204** may be a rectifier circuit for the conversion of radio frequency alternating currents into direct current (DC), such as the half wave rectifier circuit illustrated. Full wave or bridge rectifier circuits (not shown) may be used for higher efficiency or higher voltages as needed. Wireless power receiver **204** may also include storage capacitors or storage batteries (not shown) to accumulate and store wireless power over time, and to permit high peak transmit powers from communications device **206.**

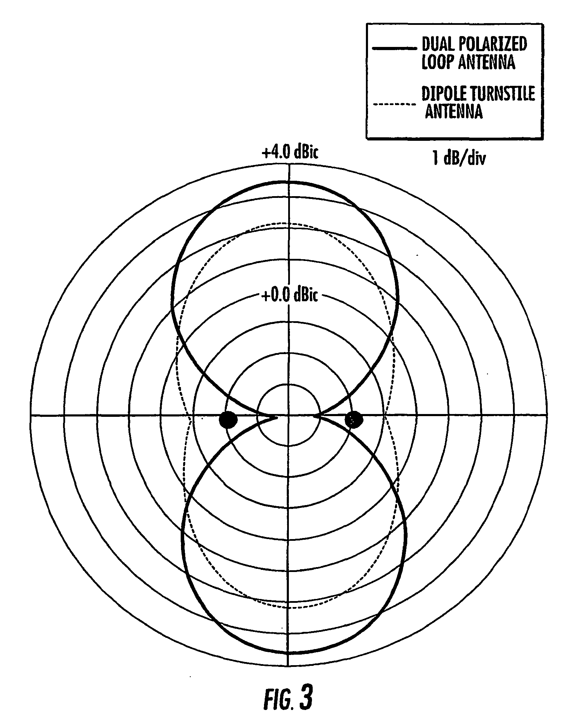

The elevation (XZ plane) cut radiation pattern for the dual polarized loop antenna embodiment of the present invention is compared with that of a conventional ½ wave dipole turnstile antenna in FIG. 3. As can be appreciated, the dual polarized loop antenna has a two petal rose pattern ($\cos^n \theta$), a half power beamwidth near 98 degrees, and a gain of 3.6 dBic compared to 2.1 dBic of a conventional ½ wave dipole turnstile antenna, resulting in an increase of 1.4 dB. This higher gain is obtained in less physical area as well. The azimuth (XY plane) cut radiation pattern (not shown) is nearly omnidirectional, e.g., circular, and has a gain near -3.3 dBi in that plane. Isolation between the antenna ports can be infinite in theory and -33 dB has been measured in practice.

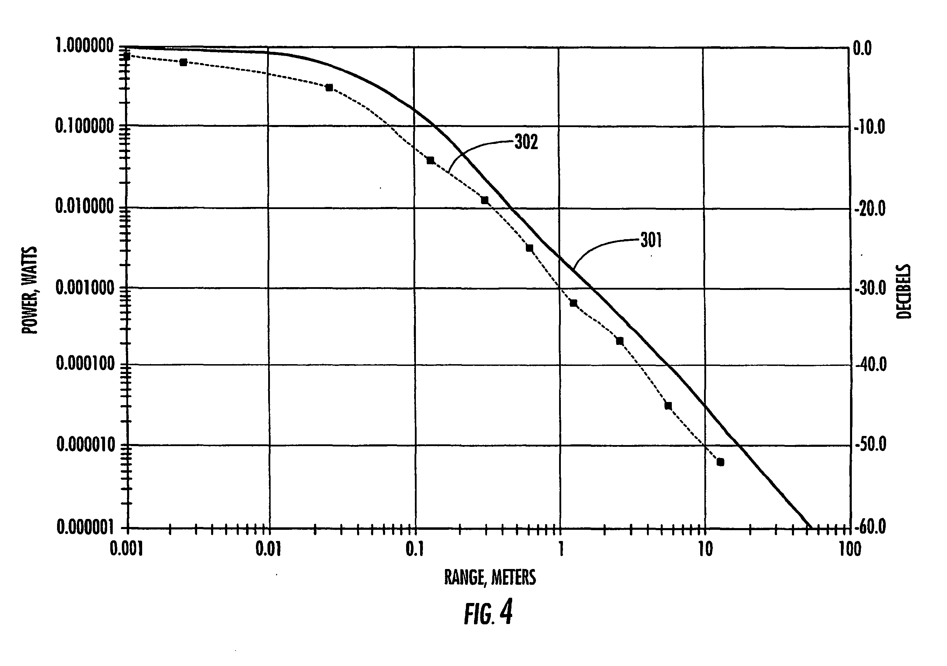

FIG. 4 is a graph of the power conveyed between two dual polarized loop antennas **10,** as a function of the range between them. FIG. 3 is for operation at 915 MHz, 1 watt transmitter power, and with antennas aligned for maximum coupling. Calculated trace **301** was obtained by a method of moments simulation in the NEC4.1 Numerical Electromagnetic Code by Lawrence Livermore National Laboratories of Livermore, CA. Measured trace **302** was obtained by building and testing thin wire prototypes of first and second dual polarized loop antennas **110, 210** in an anechoic chamber.

The measured data indicates slightly higher losses than calculated. This was primarily due to reflection loss due to VSWR: the antennas **110, 210** were operated directly into a 50 ohm system for simplicity, resulting in 2.8 to 1 VSWR and 1.1 dB of reflection loss at each end. As can be seen, the difference between measured and calculated is about 2.2 dB at most ranges which corresponds to the 2(1.1) = 2.2 dB reflection loss. The present invention can of course be further matched to avoid this loss or the loss can be taken in trade for convenience or economy. The impedance at series signal feedpoints **14, 16** at resonance may be about Z = 130 + j0 Ohms.

At ranges beyond about 0.5λ. coupling between two dual polarized loop antennas 10 is by radiated far fields, which may be calculated as:

$$P_r = P_t \, (\lambda/4\pi r)^2 \, G_t \, G_r$$

where:

$P_t$ = The Power Input Into The Transmit Antenna, Watts

Pr = The Power Extracted From The Receive Antenna, Watts

$\lambda$ = The Free Space Wavelength In Meters

r = The Free Space Range Between The Antennas

$G_t$ = The Transmit Antenna Gain = $10^{(\text{Transmit Antenna Gain in dBi/10})}$

$G_t$ = The Receive Antenna Gain = $10^{(\text{Receive Antenna Gain in dBi/10})}$.

The above equation assumes perfectly aligned antennas and perfect impedance matching. The squared term, e.g., $(\lambda/4\pi r)^2$ arises from the spherical wave spreading loss for radiated far fields. For the present invention both the transmit and receive antenna gain is about $10^{(3.6/10)}$ = 2.3.

Exact resonance in the present invention loop antennas occurs at slightly larger than 1 wavelength ($\lambda$) nominal circumference. For thin wire loop conductors, of diameter $<\lambda/50$, resonance occurs at 1.04λ. This is in reverse to thin wire ½ wave dipoles, where exact resonance may occur at 0.47λ to 0.48λ. Although 1λ nominal circumference is a preferred embodiment for loop antenna **12,** the invention may continue to produce dual polarization for smaller loop circumferences.

The preceding discussion has been for series signal sources **18, 20,** to be identical in frequency and with a constant phase relationship. Series signal sources **18, 20** may however be operated slightly offset in frequency with only a slight degradation in isolation between ports **14, 16.**

The present invention is not so limited as to require discontinuities in the loop conductor at signal feed points **14, 16,** and other signal feed approaches may be used, as for example, shunt feeding. The gamma or Y match are suitable shunt feeds, as are common in dipole and yagi-uda antenna practice, and would be appreciated by those skilled in the art.

Inset feed approaches may also be used to form signal feed points **14, 16.** For instance, loop electrical conductor **12** may be made of coaxial cable, and the radiating current a common mode current on the outside of a coaxial cable loop. The coax cable braid may be spread, but not severed, to bring the center conductor out at the desired location, and the signal feed points **14, 16** formed by a discontinuity the coaxial cable loops outer conductor. Also, other loop shapes may be substituted in the present invention, with qualitatively similar results. For instance the full wave circular loop may be made square, with 1/4 wavelength sides, or even triangular.

Accordingly, a dual polarization loop antenna is provided with an increase in gain and decrease in size. In the antenna according to the present invention there are two isolated feedpoints in series in the loop conductor and dual orthogonal polarizations. Sufficient port isolation may be provided to simultaneous convey wireless power and communications.

**Claims**

1. A wireless communication system (100) for data communication and power transmission, the system comprising:

   a first device (102) which is a radio frequency identification (RFID) reader including

   a wireless power transmitter (104),
   a first wireless data communications unit (106), and
   a first dual polarized loop antenna (110) comprising a first loop electrical conductor (112), having a perimeter length of about one wavelength, and first and second signal feedpoints (114, 116) isolated from each other, said isolated signal feedpoints (114, 116) being placed along the first loop electrical conductor and separated by one quarter of the perimeter length of the first loop electrical conductor,
   the wireless power transmitter being coupled to the first isolated signal feedpoint to transmit a power signal having a frequency corresponding to said wavelength and a first polarization, and the wireless data communications unit being coupled to the second isolated signal feedpoint to communicate using a data signal having a frequency corresponding to said wavelength and a second polarization; and

   a second device (202) which is an RFID tag for communications with the first device and including

   a second dual polarized loop antenna (210) comprising a second loop electrical conductor (212), having a perimeter length of about one wavelength, and first and second signal feedpoints (214, 216) isolated from each other, said isolated signal feedpoints (214, 216) being placed along the second loop electrical conductor and separated by one quarter of the perimeter length of the second loop electrical conductor,
   a second wireless data communications unit (206) coupled to the second isolated signal feedpoint of the second dual polarized loop antenna to communicate with the wireless data communications unit of the first device using the data signal having the second polarization, and
a wireless power receiver (204) coupled to the first isolated signal feedpoint of the second dual polarized loop antenna to receive the power signal having the first polarization from the wireless power transmitter of the first device, and to provide power for the second device.

2. The wireless communication system according to Claim 1, wherein the first and second dual polarized loop antennas provide for simultaneous data communication and power transmission between the first and second devices.

3. The wireless communication system according to Claim 1, wherein each of the first and second isolated signal feedpoints of each of the first and second dual polarized loop antennas defines a discontinuity in the respective first and second loop electrical conductors.

4. The wireless communication system according to Claim 1, wherein each of the first and second dual polarized loop antennas comprises a dual linearly polarized loop antenna.

5. The wireless communication system according to Claim 1, wherein the first and second isolated signal feedpoints along the loop electrical conductor of the first dual polarized loop antenna being operated at a signal feedpoint phase angle input difference of 0 degrees.

6. A method for data communication and power transmission between a first wireless communication device which is an RFID reader and a second wireless communication device which is an RFID tag, the method comprising:

   operating the first device including a wireless power transmitter, a first wireless data communications unit, and a first dual polarized loop antenna comprising a loop electrical conductor, having a perimeter length of about one wavelength, and first and second signal feedpoints isolated from each other, said isolated signal feedpoints (114, 116) being placed along the loop electrical conductor and separated by one quarter of the perimeter length of the loop electrical conductor, the wireless power transmitter being coupled to the first isolated signal feedpoint and transmitting a power signal having a frequency corresponding to said wavelength and a first polarization, and the wireless data communications unit being coupled to the second isolated signal feedpoint and communicating using a data signal having a frequency corresponding to said wavelength and a second polarization; and

operating the second device including a second dual polarized loop antenna comprising a loop electrical conductor, having a perimeter length of about one wavelength, and first and second signal feedpoints isolated from each other, said isolated signal feedpoints (114, 116) being placed along the loop electrical conductor and separated by one quarter of the perimeter length of the loop electrical conductor, a second wireless data communications unit coupled to the second isolated signal feedpoint of the second dual polarized loop antenna and communicating with the wireless data communications unit of the first device using the data signal having the second polarization, and a wireless power receiver coupled to the first isolated signal feedpoint of the second dual polarized loop antenna and receiving the power signal having the first polarization from the wireless power transmitter of the first device, and providing power for the second device.

7. The method according to Claim 6, wherein data communication and power transmission is simultaneous.

8. The method according to Claim 7, further comprising the step of operating the first and second isolated signal feedpoints along the loop electrical conductor of the first dual polarized loop antenna at a signal feedpoint phase angle input difference of 0 degrees.

**Patentansprüche**

1. Drahtloses Kommunikationssystem (100) zur Datenkommunikation und Leistungsübertragung, wobei das System umfasst:

- eine erste Einrichtung (102), die ein Hochfrequenzkennungs- (RFID - Radio Frequency Identification) Leser ist und umfasst:

- einen drahtlosen Leistungssender (104),
- eine erste drahtlose Datenkommunikationseinrichtung (106), und
- eine erste doppelt polarisierte Rahmenantenne (110), die eine erste elektrische Leiterschleife (112) mit einer Umfangslänge von ungefähr einer Wellenlänge und erste und zweite voneinander isolierte Signaleinspeisepunkte (114, 116) umfasst, wobei die voneinander isolierten Signaleinspeisepunkte (114, 116) längs der ersten elektrischen Leiterschleife angeordnet und durch ein Viertel der Umfangslänge der ersten elektrischen Leiterschleife voneinander getrennt sind,
- wobei der drahtlose Leistungssender mit dem ersten isolierten Signaleinspeisepunkt gekoppelt ist, um ein Leistungssignal mit einer der Wellenlänge entsprechenden Frequenz und einer ersten Polarisation zu senden, und die drahtlose Datenkommunikationseinrichtung mit dem zweiten isolierten Signaleinspeisepunkt gekoppelt ist, um unter Verwendung eines Datensignals mit einer der Wellenlänge entsprechenden Frequenz und einer zweiten Polarisation zu kommunizieren, und

- eine zweite Einrichtung (202), die eine RFID-Marke zur Kommunikation mit der ersten Einrichtung ist und umfasst:

- eine zweite doppelt polarisierte Rahmenantenne (210), die eine zweite elektrische Leiterschleife (212) mit einer Umfangslänge von ungefähr einer Wellenlänge und erste und zweite voneinander isolierte Signaleinspeisepunkte (214, 216) umfasst, wobei die voneinander isolierten Signaleinspeisepunkte (214, 216) längs der zweiten elektrischen Leiterschleife angeordnet und durch ein Viertel der Umfangslänge der zweiten elektrischen Leiterschleife voneinander getrennt sind,
- eine zweite drahtlose Datenkommunikationseinrichtung (206), die mit dem zweiten isolierten Signaleinspeisepunkt der zweiten doppelt polarisierten Rahmenantenne gekoppelt ist, um unter Verwendung des Datensignals mit der zweiten Polarisation mit der drahtlosen Datenkommunikationseinrichtung der ersten Einrichtung zu kommunizieren, und
- einen drahtlosen Leistungsempfänger (204), der mit dem ersten isolierten Signaleinspeisepunkt der zweiten doppelt polarisierten Rahmenantenne gekoppelt ist, um das Leistungssignal mit der ersten Polarisation von dem drahtlosen Leistungssender der ersten Einrichtung zu empfangen und die zweite Einrichtung mit Leistung zu versorgen.

2. Drahtloses Kommunikationssystem nach Anspruch 1, bei dem die erste und die zweite doppelt polarisierte Rahmenantenne eine gleichzeitige Datenkommunikation und Leistungsübertragung zwischen der ersten und der zweiten Einrichtung vor-

**3.** Drahtloses Kommunikationssystem nach Anspruch 1, bei dem jeder der ersten und zweiten isolierten Signaleinspeisepunkte jeder der ersten und zweiten doppelt polarisierten Rahmenantennen in der jeweiligen ersten und zweiten elektrischen Leiterschleife eine Diskontinuität definiert.

**4.** Drahtloses Kommunikationssystem nach Anspruch 1, bei dem jede der ersten und zweiten doppelt polarisierten Rahmenantennen eine doppelt linear polarisierte Rahmenantenne umfasst.

**5.** Drahtloses Kommunikationssystem nach Anspruch 1, bei dem der erste und der zweite isolierte Signaleinspeisepunkt längs der elektrischen Leiterschleife der ersten doppelt polarisierten Rahmenantenne mit einer Signaleinspeisepunktphasenwinkeleingangsdifferenz von 0 Grad betrieben wird.

**6.** Verfahren zur Datenkommunikation und Leistungsübertragung zwischen einer ersten drahtlosen Kommunikationseinrichtung, die ein RFID-Leser ist, und einer zweiten drahtlosen Kommunikationseinrichtung, die eine RFID-Marke ist, wobei das Verfahren umfasst:

- Betreiben der ersten Einrichtung, die einen drahtlosen Leistungssender, eine erste drahtlose Datenkommunikationseinrichtung und eine erste doppelt polarisierte Rahmenantenne umfasst, die eine elektrische Leiterschleife mit einer Umfangslänge von ungefähr einer Wellenlänge und erste und zweite voneinander isolierte Signaleinspeisepunkte umfasst, wobei die voneinander isolierten Signaleinspeisepunkte (114, 116) längs der elektrischen Leiterschleife angeordnet und durch ein Viertel der Umfangslänge der elektrischen Leiterschleife voneinander getrennt sind, wobei der drahtlose Leistungssender mit dem ersten isolierten Signaleinspeisepunkt gekoppelt ist und ein Leistungssignal mit einer der Wellenlänge entsprechenden Frequenz und einer ersten Polarisation sendet, und die drahtlose Datenkommunikationseinrichtung mit dem zweiten isolierten Signaleinspeisepunkt gekoppelt ist und unter Verwendung eines Datensignals mit einer der Wellenlänge entsprechenden Frequenz und einer zweiten Polarisation kommuniziert, und
- Betreiben der zweiten Einrichtung, die eine zweite doppelt polarisierte Rahmenantenne, welche eine elektrische Leiterschleife mit einer Umfangslänge von ungefähr einer Wellenlänge und erste und zweite voneinander isolierte Signaleinspeisepunkte umfasst, wobei die voneinander isolierten Signaleinspeisepunkte (214, 216) längs der elektrischen Leiterschleife angeordnet und durch ein Viertel der Umfangslänge der elektrischen Leiterschleife voneinander getrennt sind, eine zweite drahtlose Datenkommunikationseinrichtung, die mit dem zweiten isolierten Signaleinspeisepunkt der zweiten doppelt polarisierten Rahmenantenne gekoppelt ist und unter Verwendung des Datensignals mit der zweiten Polarisation mit der drahtlosen Datenkommunikationseinrichtung der ersten Einrichtung kommuniziert, und einen drahtlosen Leistungsempfänger umfasst, der mit dem ersten isolierten Signaleinspeisepunkt der zweiten doppelt polarisierten Rahmenantenne gekoppelt ist und das Leistungssignal mit der ersten Polarisation von dem drahtlosen Leistungssender der ersten Einrichtung empfängt und die zweite Einrichtung mit Leistung versorgt.

**7.** Verfahren nach Anspruch 6, bei dem die Datenkommunikation und Leistungsübertragung gleichzeitig erfolgen.

**8.** Verfahren nach Anspruch 7, das ferner den Schritt des Betreibens des ersten und des zweiten isolierten Signaleinspeisepunkts längs der elektrischen Leiterschleife der ersten doppelt polarisierten Rahmenantenne mit einer Signaleinspeisepunktphasenwinkeleingangsdifferenz von 0 Grad umfasst.

## Revendications

**1.** Système de communication sans fil (100) pour communication de données et transmissions de puissance, le système comprenant :

un premier dispositif (102) qui est un lecteur d'identification par radiofréquence (RFID) incluant

un émetteur de puissance sans fil (104), une première unité de communication de données sans fil (106), et une première antenne à boucle bipolarisée (110) comprenant un premier conducteur électrique en boucle (112), présentant une longueur de périmètre d'environ une longueur d'onde, et des premier et deuxième points d'alimentation de signaux (114, 116) isolés l'un de l'autre, lesdits points d'alimentation de signaux isolés (114, 116) étant placés le long du premier conducteur électrique en boucle et séparés d'un quart de la longueur de périmètre du premier conducteur électrique en boucle,

l'émetteur de puissance sans fil étant couplé au premier point d'alimentation de signaux isolé pour transmettre un signal de puissance ayant une fréquence correspondant à ladite longueur d'onde et une première polarisation, et l'unité de communication de données sans fil étant couplée au deuxième point d'alimentation de signaux isolé pour communiquer en utilisant un signal de données ayant une fréquence correspondant à ladite longueur d'onde et une deuxième polarisation ; et

un deuxième dispositif (202) qui est une étiquette d'identification par radiofréquence pour communication avec le premier dispositif et incluant

une deuxième antenne à boucle bipolarisée (210) comprenant un deuxième conducteur électrique en boucle (212), présentant une longueur de périmètre d'environ une longueur d'onde, et des premier et deuxième points d'alimentation de signaux (214, 216) isolés l'un de l'autre, lesdits points d'alimentation de signaux isolés (214, 216) étant placés le long du deuxième conducteur électrique en boucle et séparés d'un quart de la longueur de périmètre du deuxième conducteur électrique en boucle,
une deuxième unité de communication de données sans fil (206) couplée au deuxième point d'alimentation de signaux isolé de la deuxième antenne à boucle bipolarisée pour communiquer avec l'unité de communication de données sans fil du premier dispositif en utilisant le signal de données ayant la deuxième polarisation, et
un récepteur de puissance sans fil (204) couplé au premier point d'alimentation de signaux isolé de la deuxième antenne à boucle bipolarisée pour recevoir le signal de puissance ayant la première polarisation depuis l'émetteur de puissance sans fil du premier dispositif, et pour fournir la puissance au deuxième dispositif.

2. Système de communication sans fil selon la revendication 1, dans lequel les première et deuxième antennes à boucle bipolarisées procurent simultanément la communication de données et la transmission de puissance entre les premier et deuxième dispositifs.

3. Système de communication sans fil selon la revendication 1, dans lequel chacun parmi les premier et deuxième points d'alimentation de signaux isolés de chacune parmi les première et deuxième antennes à boucle bipolarisées définit une discontinuité dans les premier et deuxième conducteurs électriques en boucle respectifs.

4. Système de communication sans fil selon la revendication 1, dans lequel chacune parmi les première et deuxième antennes à boucle bipolarisées comprend une antenne à boucle bipolarisée de manière linéaire.

5. Système de communication sans fil selon la revendication 1, dans lequel les premier et deuxième points d'alimentation de signaux isolés le long du conducteur électrique en boucle de la première antenne à boucle bipolarisée sont actionnés à une différence d'entrée d'angle de phase de point d'alimentation de signaux de 0 degré.

6. Procédé de communication de données et de transmission de puissance entre un premier dispositif de communication sans fil qui est un lecteur d'identification par radiofréquence et un deuxième dispositif de communication sans fil qui est une étiquette d'identification par radiofréquence, le procédé comprenant les étapes consistant à :

actionner le premier dispositif incluant un émetteur de puissance sans fil, une première unité de communication de données sans fil, et une première antenne à boucle bipolarisée comprenant un conducteur électrique en boucle, présentant une longueur de périmètre d'environ une longueur d'onde, et des premier et deuxième points d'alimentation de signaux isolés l'un de l'autre, lesdits points d'alimentation de signaux isolés (114, 116) étant placés le long du conducteur électrique en boucle et séparés d'un quart de la longueur de périmètre du conducteur électrique en boucle, l'émetteur de puissance sans fil étant couplé au premier point d'alimentation de signaux isolé et transmettant un signal de puissance ayant une fréquence correspondant à ladite longueur d'onde et une première polarisation, et l'unité de communication de données sans fil étant couplée au deuxième point d'alimentation de signaux isolé et communiquant en utilisant un signal de données ayant une fréquence correspondant à ladite longueur d'onde et une deuxième polarisation ; et
actionner le deuxième dispositif incluant une deuxième antenne à boucle bipolarisée comprenant un conducteur électrique en boucle, présentant une longueur de périmètre d'environ une longueur d'onde, et des premier et deuxième points d'alimentation de signaux isolés l'un de l'autre, lesdits points d'alimentation de signaux isolés (114, 116) étant placés le long du conducteur électrique en boucle et séparés d'un quart de la longueur de périmètre du conducteur électrique en boucle, une deuxième unité de communication de données sans fil couplée au deuxième point d'alimentation de signaux isolé de la deuxième antenne à boucle bipolarisée et communiquant avec l'unité de communication de données sans fil du premier dispositif en utilisant le signal de données ayant la deuxième polarisation, et un récepteur de puissance sans fil couplé au premier point d'alimentation de signaux isolé de la deuxième antenne à boucle bipolarisée et recevant le signal de puissance ayant la première polarisation depuis l'émetteur de puissance sans fil du premier dispositif, et fournissant la puissance au deuxième dispositif.

7. Procédé selon la revendication 6, dans lequel la communication de données et la transmission de puissance sont simultanées.

8. Procédé selon la revendication 7, comprenant en outre l'étape consistant à actionner les premier et deuxième points d'alimentation de signaux isolés le long du conducteur électrique en boucle de la première antenne à boucle bipolarisée à une différence d'entrée d'angle de phase de point d'alimentation de signaux de 0 degré.

FIG. 1

FIG. 2

EP 2 401 697 B1

FIG. 3

FIG. 4

EP 2 401 697 B1

# EP 2 401 697 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 1892221 A, Runge
- US 20080136720 A, Parsche
- US 645576 A, Tesla
- US 2147809 A, Alford
- US 5977921 A, Niccolai
- US 5838283 A, Nakano
- WO 0064004 A
- EP 0257544 A2
- US 2008136720 A1

### Non-patent literature cited in the description

- **W. A. TYRELL.** Hybrid Circuits For Microwaves. *Proceedings of the Institute Of Radio Engineers,* November 1947, 1294-1306